(19) Europäisches Patentamt

European Patent Office

Office européen des brevets

(11) **EP 0 997 848 A2**

## (12) EUROPEAN PATENT APPLICATION

(43) Date of publication:
**03.05.2000 Bulletin 2000/18**

(51) Int. Cl.[7]: **G06T 9/00**

(21) Application number: **99121501.3**

(22) Date of filing: **28.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.10.1998 US 181485**

(71) Applicant: **Xerox Corporation
Rochester, New York 14644 (US)**

(72) Inventors:
• **De Queiroz, Ricardo L.
Pittsford, NY 14534 (US)**
• **Fleckenstein, Patrick A.
Rochester, NY 14609 (US)**
• **Buckley, Rober R.
Rochester, NY 14625 (US)**

(74) Representative:
**Grünecker, Kinkeldey,
Stockmair & Schwanhäusser
Anwaltssozietät
Maximilianstrasse 58
80538 München (DE)**

(54) **Image data compression apparatus**

(57)     An apparatus for compressing digital image data to improve the efficiency of serial data transmission is disclosed. More specifically, the present invention accomplishes image transmission by providing multiple image processing modules, and then selecting among the modules such that processing of the entire image is performed in the most efficient manner. The output from each module is stored in a buffer until transmission via an associated modem can occur.

FIG. 4

EP 0 997 848 A2

## Description

The present invention is directed to an apparatus for compressing digital image data in a manner that allows the transmission speed of an associated modem to be maintained. More specifically, the invention accomplishes image transmission by implementing multiple compressors, each of which compresses image data at a different speed. The data removed from these compressors is stored in a buffer until the modem is ready to transmit it. Throughout operation the invention continues to send the image data to the compressor that will process it at the appropriate speed to improve the efficiency of serial data transmission without causing a substantial loss in image quality.

The transmission of electronic data via facsimile machines and similar devices has become quite common, and efforts to transmit significantly larger volumes of this data within a substantially shortened period of time are constantly being made. This is true not only to allow data to be sent from one location to another at faster speeds and thereby cause less inconvenience to the user, but to enable more complex data to be transmitted between the same locations without drastically increasing the required transmission time. For example the facsimile transmission time for a detailed halftoned image will be many times more than that of a simple sheet of black text on a white page when using the same fax machine. By the same token, fax transmission of a color image will require an even greater amount of time than its greatly detailed halftoned counterpart.

The "sending" portion of fax transmission includes scanning the original image and generating a corresponding digital image thereof, followed by serial transmission of digital image data to a receiving fax machine. Without any form of data reduction, transmission of color image data files via facsimile would require extensive resources -- very fast modems and/or large buffers -- and would still take a great deal of time, thereby causing such transmission to become very expensive and therefore, impractical. Thus, some form of data compression is typically employed prior to fax transmission of color image data.

The JPEG (Joint Photographic Experts Group) standard provides a well known method of compressing electronic data. JPEG uses the discrete cosine transform (DCT) to map spatial data into spatial frequency domain data. Briefly, first JPEG requires transforming an 8 x 8 block of pixels into a set of 8 x 8 coefficients using the DCT to produce a DC coefficient (DCC), and a set of AC coefficients (ACCs). The DCC and ACCs are quantized, rounded to the nearest whole number and arranged in a one dimensional vector which is encoded into a bit stream.

Because color image data is so complex, ordinary data compression schemes require the application of high compression ratios in order to complete the transmission within an acceptable time frame. Higher compression ratios lead to more data loss, typically at the higher end of the frequency range.

Successful fax transmission requires a proper correspondence between the compression ratio being applied to the image and the CPU speed of the sending fax machine. In other words, if the compression ratio is smaller than necessary for a given CPU speed, the CPU will have to be slowed down, or the data will have to wait to be transmitted and an appropriately sized buffer will be required. On the other hand, large amounts of compression mean that very few bits will be generated and less data will have to be sent through the modem. If the compression ratio is high relative to the CPU speed the modem will become idle waiting for the CPU to complete image processing and transmit more data. Since modems are typically configured to detect a large lapse in data transmission as the end of transmission, this large gap typically causes the modem to disconnect. Thus, it is advantageous to continue the stream of data from the sending fax machine to the receiving fax machine, and eliminate gaps in the data stream. One way to do this is obviously to implement a faster JPEG compressor which can keep the data moving through the modem even if a high compression ratio is used. However, this solution results in significant cost increases and may be impractical.

One way to maintain proper compression ratio to clock speed correspondence is to provide multiple compressors to which portions of the digital image data may be transmitted. If the data stream is being generated at an acceptable rate, subsequent image data can continue to be processed by the compressor which will provide the best image quality. However, if the data stream is being generated too slowly, subsequent image data can be routed to a compressor that will process it at a faster rate, albeit by sacrificing some image quality. Alternatively, if the data stream is being generated so fast that the modem cannot keep up, image data can be transmitted to a compressor that will process it at a slower rate, thereby allowing image quality to be preserved without causing the modem to remain idle.

The following disclosures may be relevant to aspects of the present invention:

US-A 5,699,457 to Adar et al. issued December 16, 1997 discloses a method of bit rate control and block allocation for discrete cosine transform (DCT) image signal compression includes the steps of (a) partitioning the image signals in blocks representing portions of the total image, (b) calculating DCT coefficients for image data in all blocks, (c) obtaining a measure of block activity (BACT) for each block based on DCT coefficients and for the total image activity (ACT) as a sum of the measures of all block activity, and (d) determining a code allocation factor (AF) for each block based on the ratio of block activity (BACT) to target code volume (TCV data) for the coded image data. The method also includes (e) allocating bits for each block using the allocation factor (AF) for each block and the target code volume (DCV data).

US-A 5,699,170 to Yokose et al. issued December 16, 1997 discloses an image communication system wherein transmission of an image between an image transmission apparatus and an image reception apparatus which include image output sections having different performances can be performed without making an inquiry for the performance prior to transmission. An image is inputted by an image input section and sent to a hierarchization section in the image transmission apparatus. The hierarchization section converts the inputted image into hierarchic communication data and transmits hierarchized data to a selection section of the image reception apparatus. The selection section extracts only necessary data from the hierarchic communication data transmitted thereto in accordance with the performance of an image output section of the image reception section and then sends the necessary data to the image output section after, if necessary, they are converted into image data. The image output section visualize the image data transmitted thereto from the selection section.

US-A 5,642,438 to Babkin issued June 24, 1997 discloses image compression implementing a fast two-dimensional discrete cosine transform. More specifically, Babkin discloses a method and apparatus for the realization of two-dimensional discrete cosine transform (DCT) for an 8 x 8 image fragment with three levels of approximation of DCT coefficients.

Pending US Ser. No. 09/119,023 filed on July 20, 1998 by Ricardo L. DeQueiroz and assigned to the assignee of the present application discloses a method and apparatus for compressing digital image data to improve the efficiency of serial data transmission. The invention accomplishes image compression by performing the most complex portions of a standard compression technique on a smaller amount of data than the usual 8 x 8 block of image data. The invention includes a fast JPEG compressor based on a modified two-dimensional discrete cosine transform.

Concurrently filed US Patent Application identified by Attorney Docket No. D/98011 by DeQueiroz et al. assigned to the assignee of the present application titled Method and Apparatus for Using Multiple Transforms to Fill a Buffer for Enhanced Image Data Transmission accomplishes image transmission by providing multiple image processing modules, and then selecting among the modules such that processing of the entire image is performed in the most efficient manner. The output from each module is stored in a buffer until transmission via an associated modem can occur.

Accordingly, although known apparatus and processes are suitable for their intended purposes, a need remains for an apparatus that can efficiently process digital image data and improve the efficiency of serial data transmission.

In accordance with an aspect of the invention there is provided an apparatus for improving the speed and efficiency of electronic data compression, which includes a segmenter which divides image data into a plurality of input image data blocks, wherein the image data corresponds to the light intensity of an original image; a plurality of image processing modules communicating with the segmenter, wherein any of the modules may process the segmented image data blocks; a buffer communicating with the image processing modules to store the segmented image data after it is processed by one of the modules; and a decision logic device communicating with the buffer and with the modules to designate one of the modules for processing of a segmented image data block, based upon a status of the buffer.

In accordance with another aspect of the invention a decision logic device of an apparatus for improving the speed and efficiency of electronic data compression includes a buffer status input communicating with the buffer to indicate a volume of data residing in the buffer; a module threshold input which indicates a threshold of image data that may be most efficiently processed by an associated module; and a selector which compares the buffer volume indication with the module threshold indication and causes, based upon the comparison, either sending of the segmented image data block to the associated module or connecting of the module threshold input with a next module associated with a next module.

In accordance with yet another aspect of the invention, an apparatus for improving the speed and efficiency of electronic data transmission, includes means for acquiring input image data which represents the light intensity of an image; means for segmenting the input image data to form a plurality of image data blocks; means for selecting, based on a buffer status, a module for receipt of an input image data block; means for processing the received image data block in said module; and means for depositing the processed image data block to a buffer at a buffer fill rate.

In accordance with still another aspect of the invention module selecting means in an apparatus for improving the speed and efficiency of electronic data transmission includes means for checking said buffer status, wherein the buffer status indicates a volume of the input image data residing in the buffer, and is a function of the buffer fill rate and the buffer emptying rate; means for comparing the input image data volume residing in the buffer with a plurality of module threshold ranges to choose a module associated with one of the module threshold ranges to receive the input image data; and means for sending the input image data block to the chosen module.

The present invention deals with a common problem in digital image processing systems - obtaining an effective yet cost efficient way to supply a continuous stream of complex image data from a sending fax machine to a receiving fax machine. One way to solve this problem includes using multiple compressors each having different data compression rates, and selecting the appropriate compressor for processing of the image data based upon how much data is already stored in the buffer. Specifically, if the buffer is full, the image data will continue to be processed by the processor which provides the best image reproduction accuracy, albeit at a relatively slow rate. As the buffer empties, image data will be sent to a compressor which can process the image data at a faster rate, although some loss in image reproduction accuracy may occur. While some areas of the original document will be reproduced at a lesser accuracy level, the overall quality of the output fax will be sufficient for most purposes.

Other features and advantages of the present invention will become apparent as the following description proceeds and upon reference to the drawings, in which:

FIG. 1 is a generalized block diagram illustrating general aspects of a facsimile machine that may be used to practice the present invention.

FIG. 2 contains a schematic illustration of the various elements of the present invention.

FIG. 3 contains a detailed illustration of one embodiment of the image processing compressors and their associated thresholds.

FIG. 4 contains a flow chart detailing the steps followed according to one embodiment of the decision logic device of the present invention.

FIG. 5 contains a detailed illustration of another embodiment of the decision logic device of the present invention.

FIG. 6 contains a schematic illustration of an ordinary JPEG compression that may be practiced by the present invention.

FIG. 7 contains a schematic illustration of a JPEG compression technique using approximate values as may be practiced by the present invention.

FIG. 8 contains a schematic illustration of another JPEG compression technique using approximate values as may be practiced by the present invention.

While the present invention will be described in connection with a preferred embodiment thereof, it will be understood that it is not intended to limit the invention to that embodiment.

The present invention is directed to an apparatus for compressing complex digital image data to enhance the efficiency of data transmission. More specifically, the invention includes multiple data compressors, each of which operates at a different compression rate. The status of an associated buffer is continuously checked and used to send image data to or get it from the appropriate module so the imaging data may be transmitted in the most efficient manner.

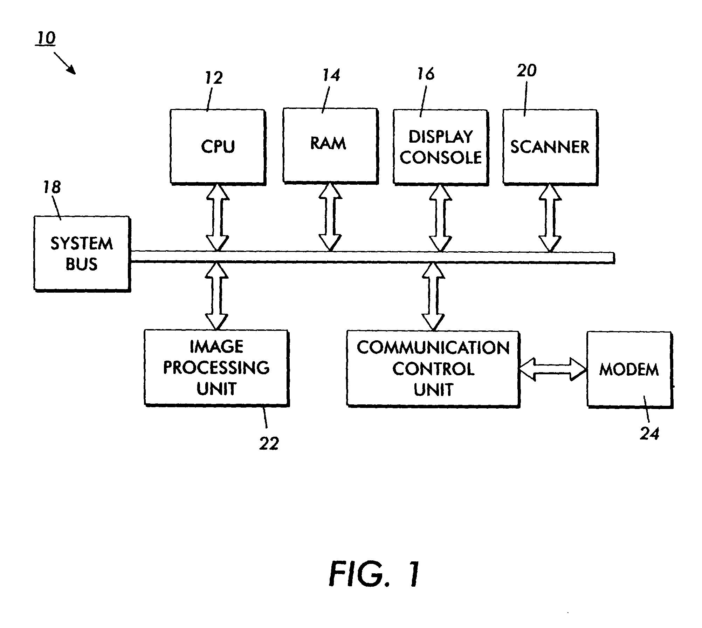

Referring now to the drawings where the showings are for the purpose of describing an embodiment of the invention and not for limiting same, FIG. 1 is a block diagram showing structure of an embodiment of a facsimile (fax) apparatus 10 according to the present invention. Fax machine 10 includes a CPU 12 for executing controlling processes and facsimile transmission control procedures, a RAM 14 for controlling programs and a display console 16 with various buttons and/or switches for controlling the facsimile apparatus and LCDs or LEDs for reviewing the status of system operation. A scanner 20 is also included for acquiring an original image and generating image data therefrom. Image processing unit 22 is included to perform encoding and decoding (compression and decompression) processes between an image signal and transmitted codes. While not required, the present invention will typically reside in image processing unit 22. Significantly for purposes of this invention, fax 10 includes or interfaces with a modem 24, which is a modulating and demodulating device that transmits and receives picture information over telephone lines to a compatible receiving device 26, such as another facsimile machine, a printer, computer terminal or similar apparatus. As indicated, scanning via sending fax 10 is one way in which this image data may be acquired. However, those skilled in the art will recognize that other ways such file generation using a computer and retrieving a digital file from storage are also acceptable.

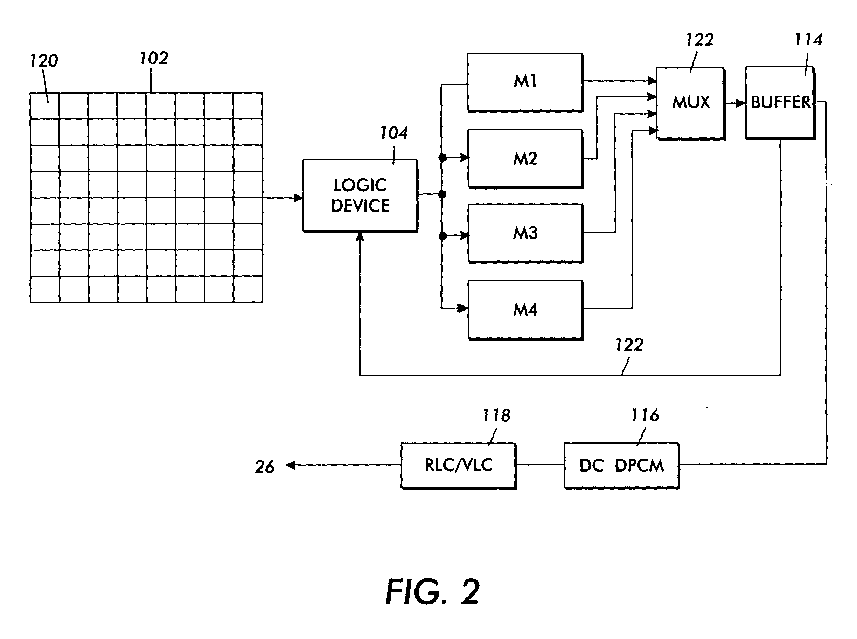

The scanned image is separated converted into image data which indicates the intensity of the light throughout the original image. In the preferred embodiment, this image data will be digital data represented as picture elements commonly known as "pixels" 120 (illustrated in FIG. 2) which represent the intensity of light at discrete locations in the image. For example, a spot that is covered with black ink will not reflect any light. The value of the pixel 120 will typically be 0 at that location. On the other hand, a spot that is completely uncovered by ink will reflect the color of the page on which the image resides. Assuming the sheet paper on which the image has been placed is white, the measured light intensity of the pixel 120 would be 1 at that spot. Gray areas, such as those which represent color or black and white halftoned areas of the image would register a light intensity somewhere between 0 and 1.

Referring now to FIG. 2, image data which describes the entire acquired image is segmented into image data blocks 102. JPEG, which provides image data blocks 102 in the form of 8 x 8 pixel matrices has shown to be very successful when used with the present invention, but the invention may be practiced with other compression techniques and using image data blocks 102 that have other dimensions. Those skilled in the art will recognize that a smaller or larger block size might be chosen when it is desired to preserve more or less image detail. In fact it should be noted that while the horizontal and vertical dimensions are identical in the embodiment of image data block 102 described here, this is not a requirement for practicing the present invention. For example, a non-square block might be chosen if the image was generated for a device possessing asymmetric resolutions in the vertical and horizontal directions.

The present invention allows sending fax 10 or similar device to maintain the transmission speed of the associated modem by compressing the image data at different speeds as the content of the buffer 114 changes. In the present invention input image data which represents the light intensity of an image is first acquired. Still referring to FIG. 2, the present invention includes segmenting the acquired input image data into multiple image data blocks 102, each of which describes a small portion of the original image. As indicated in the illustration, the invention also includes several image processing modules M1 - M4. While the invention will be described here with four image processing modules, those skilled in the art will recognize that while at least two modules are required, fewer or more than four modules can be used depending upon how wide a variation in image reproduction accuracy is to be provided, and that the invention is not limited to the use of four modules. Modules M1 - M4 will typically be compressors each of which processes the data at a different level of accuracy, thereby causing them to operate at a different rates of speed. For example, assuming that M1 reproduces the data at the highest level of accuracy, followed by M2, then M3, and that M4 has the greatest data loss, M1 will operate at the slowest speed, followed again by M2, then M3 and M4 will be the fastest. It should be noted that while all of the modules are capable of processing the image data, at least the fastest module must process it at a rate faster than the modem speed in order to prevent disconnects.

With continued reference to FIG. 2, the present invention also includes a buffer 114 in which all of the segmented image data blocks 102 are deposited after they are processed by the modules. Data is then removed from buffer 114 and transmitted to receiving fax machine 26 by modem 24. An important aspect of the present invention is decision logic device 104, which selects the appropriate module for processing of each image data block 102, based on the amount of data residing in the buffer. More specifically, decision logic device 104 first determines how much data is stored in the buffer, waiting to be transmitted by modem 24. It will typically be most desirable to send the data to M1, in order to preserve the highest image quality. But as stated before, module M1 will process the image data at a relatively slow speed. If only this module is used, disconnects may occur because data will continuously be deposited into the buffer at a rate much slower than the modem transmission rate, and the modem will eventually become idle. But in the present invention, if there is little or no data stored in buffer 114, decision logic device 104 will cause the next image data block 102 to be sent to one of the modules that will output lesser quality data, but process the data at a faster speed. As image data blocks 102 are processed by the faster modules, buffer 114 will fill and decision logic device 104 will send image data blocks to the slower modules and preserve higher image quality.

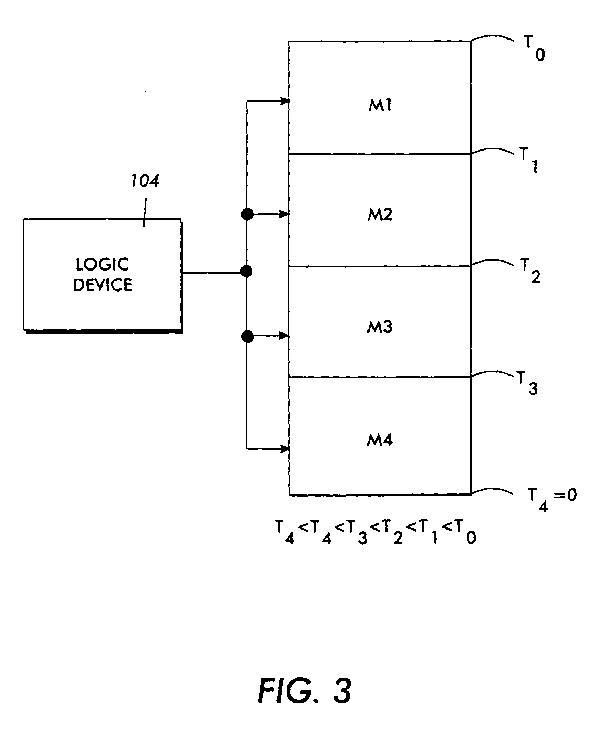

Turning now to FIG. 3, each module has a threshold range at which it will process data in the most efficient manner when used in the present invention. For example M1, the compressor which processes data to produce the highest quality output, may process data at a speed of W bits per second. In the present invention, decision logic device 104 will select M1 when the number of bits residing in the buffer is above $T_1$, the threshold of the next slowest module M2. This will allow M1 to process the image data and also keep up with the modem. The upper limit $T_0$ of bits which may be processed by M1 is referred to as its threshold. It should be noted that precise numbers for processing speed W and threshold $T_0$ are not provided here because those values are dependent upon the CPU, image content, buffer size, modem speed and compression settings for fax machine 10. Those skilled in the art will recognize that these values are easily obtained once those parameters are supplied. Like M1, M2 may process data at a speed of X bits per second (which is faster than W bits per second), and will have a threshold of $T_1$ bits. This when the number of bits residing in the buffer lies between $T_1$ and $T_2$ (again, $T_2$ is the threshold for the module that is the next slowest relative to M2), decision logic device 104 will select M2 for processing. The remaining modules will be set up similarly. That is, module M3 will process data at Y bits per second, where Y>X, and will have a threshold of $T_2$ bits, and module M4 will process at Z bits per second, where Z>Y and will have a threshold of $T_3$ bits. The lower limit should be set at $T_4 = 0$ bits, to make sure a module is designated for processing when there are no bits in buffer 114. Similarly, $T_0$ should be set at or above the capacity of buffer 114, so that it will operate when the buffer is full.

It should be noted here that when the present invention has been implemented in a facsimile machine or other transmission device, the invention may be set up to operate at any given buffer status. Thus, fax transmission may take place without use of the invention until the buffer fills, at which point the invention will begin to operate, or the invention may operate from the very beginning when the buffer is empty, thereby requiring module M4 to be used until enough data has been deposited into the buffer.

While it is not an absolute necessity, in the preferred embodiment of the invention the threshold ranges will be evenly distributed. That is, $T_0-T_1=T_1-T_2=T_2-T_3=T_3-T_4$. This is advantageous because efficient processing of the entire image requires each module to process data for as long as possible before switching to another module. Even spacing of the threshold ranges provides some resistance to transition between modules, while also allowing each module to process image data that falls within a reasonably sized threshold. In another useful alternative, the range between $T_0$ and $T_1$ may be larger than the others, which will result in better image quality for a longer period of time. In this embodiment of the invention, it will obviously also take longer for the decision logic device to switch to a faster module, thereby increasing the risk of disconnecting from the modem. While these are the preferred threshold ranges, others are possible and the invention is not limited to these examples.

It should also be noted that in the preferred embodiment, the compression speed provided by using module M4 will be faster than the speed of modem 24 for any image block content. This means that the fastest module will always be able to keep up with the modem and disconnects will not occur when the buffer is empty. As is apparent from the discussion, one threshold is provided for each module that is included with the system. Thus, in a system that includes n modules, thresholds $T_0$ to $T_n$ should be set up, where $T_n = 0$ and $T_0$ is the maximum buffer size.

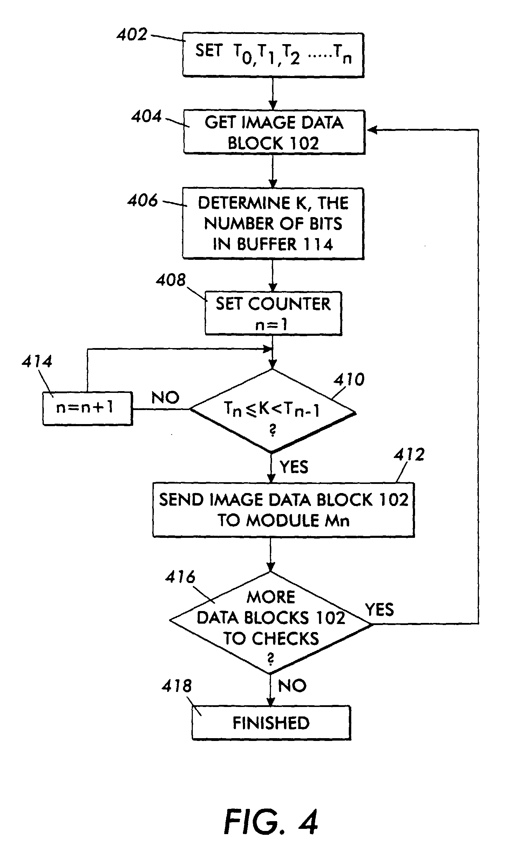

Turning now to FIG. 4, a flow chart showing the details of the operation of decision logic device 104 will now be described. Beginning with step 402, thresholds $T_1$ -$T_{n-1}$ for modules M1 - Mn are set, and the first image data block 102 is obtained. Next, the number of bits k residing in buffer 114 is obtained as indicated in step 406. The number of bits residing in the buffer at any given time is obviously a function of the rate at which processed data is exiting modules M1 - Mn as well as the speed at which modem 24 is transmitting image data out of buffer 114. Counter n is then initialized at step 408, and k is compared with thresholds $T_n$ and $T_{n-1}$ as indicated in step 410. This step determines whether the number of bits residing in the buffer is the right size to accommodate the processing speed of M1 which has a threshold range of $T_0$ -$T_1$. If so, decision logic device 104 will send image data block 102 to M1 as shown in block 412.

Continuing to refer to FIG. 4, if the k does not fall within the threshold range $T_0$ - $T_1$ decision logic device 104 will increment the counter and perform the comparison again as indicated in step 414. However, this time k will be compared with the threshold range $T_1$ - $T_2$. Threshold range comparison and counter incrementing will continue until the range in which k falls is found - That is $T_n \leq k < T_{n-1}$. At that time decision logic device 104 will send image data block 102 to the module associated with the proper range.

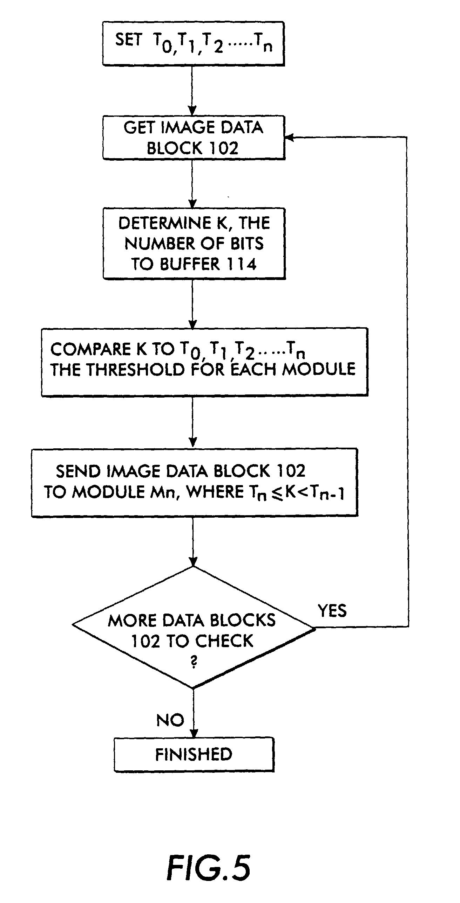

Those skilled in the art will recognize that an acceptable alternative to the method described above would be to cause decision logic device 104 to simultaneously compare k with all of the available thresholds. A flow chart illustrating such a method is shown in FIG. 5.

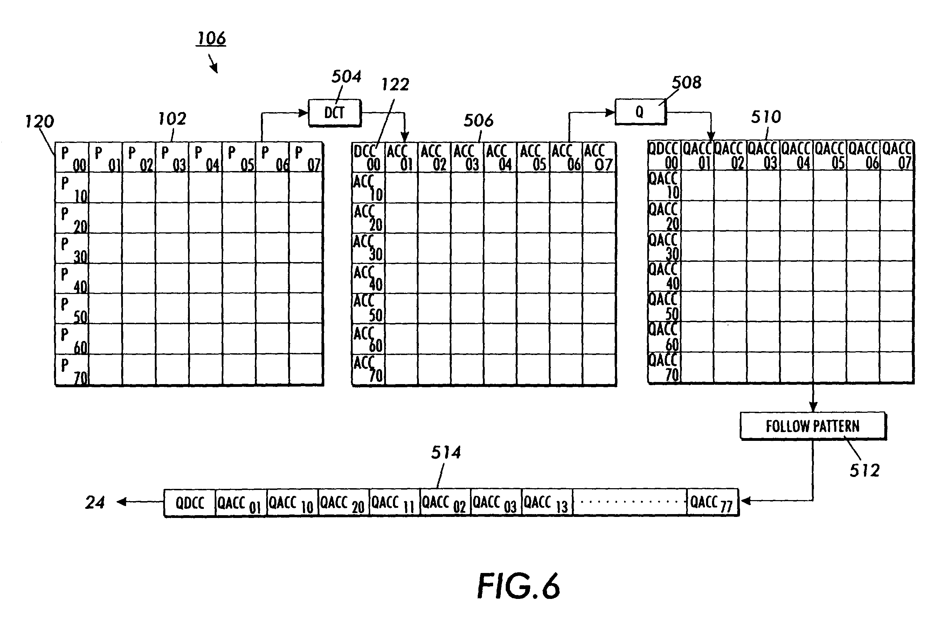

Referring now to FIG. 6, in the preferred embodiment, the slowest module (here described as M1) will process image data blocks 102 using a standard JPEG compression. Thus, once the digital image is separated into 8 x 8 image data blocks 102, image data block 102 is transformed using the discrete cosine transform (DCT) into a set 506 of 8 x 8 coefficients as indicated in step 504. The DCT coefficient with the lowest frequency is referred to as the DC coefficient (DCC), and the remaining coefficients are AC coefficients (ACCs). The DCC and ACCs are quantized -- each coefficient is divided by a predetermined value referred to as the "step size" and rounded to a whole number at step 508 and then a selected pattern (usually a "zigzag") is followed through the 8 x 8 block of quantized coefficients 510 as indicated in step 512 to place the coefficients in a desired order in a one dimensional vector 514. The quantized DCC is typically the first value of the vector 514, and is represented differentially as the actual DCC value minus the DCC of the previous block.

Ordinary JPEG compression is completed with subsequent encoding of vector 514 into a bit stream through a sequence of Run Length Counting (RLC) operations which count the number of zero ACCs that reside in the path before a non-zero ACC. These RLC operations are combined with Variable Length Codes (VLC) which encode a symbol that includes a combination of the number of zeros preceding a non-zero ACC and the ACC amplitude. This encoding produces a compressed data stream which can be transmitted to a receiving fax machine or other device 26 over communication lines.

In another embodiment of the invention, the fastest image processing module, M4 will perform only the first step of the JPEG compression. That is, image data block 102 will be subjected to DCT. After that, only the DCC will be quantized and that value will be sent to buffer 114. Again, M4 will process image data blocks 102 at the highest speed, but will also produce relatively low quality output image data.

In yet another embodiment of the invention, the remaining modules, illustrated here as M2 and M3 will perform JPEG compression on reduced data sets. Generally speaking, both M2 and M3 generate approximation data which provide estimated values of the pixels in image data block 102. Next, output image data is derived from the approximation data, and the derived output image data is stored in buffer 114 for subsequent transmission via modem 24. Generating the approximation data requires partitioning the image data block into a plurality of image data sub-blocks and representing each image data sub-block as a single value in an approximation data block. Deriving output image data from this generated data is performed by applying standard JPEG to the set of approximation data.

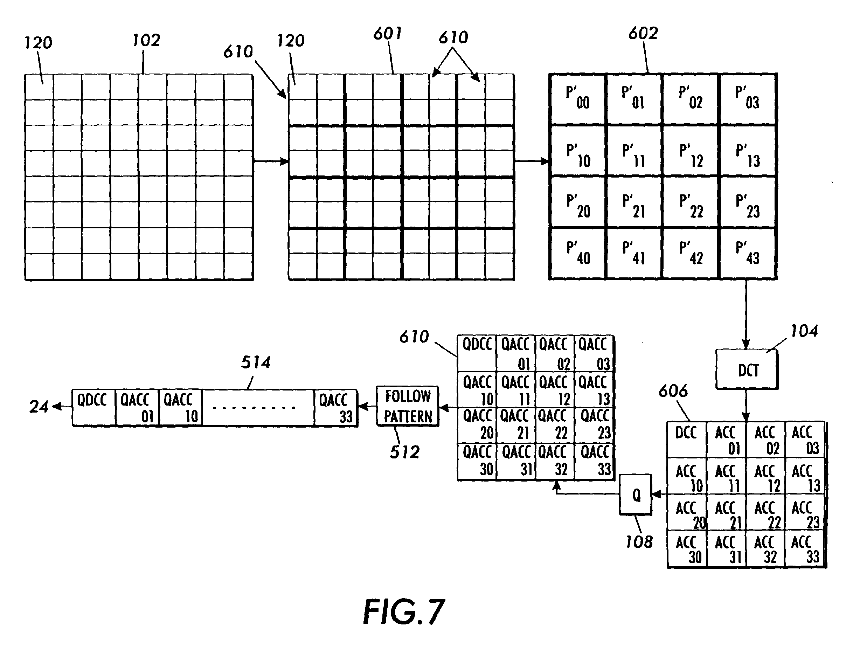

Turning first to FIG. 7 for a detailed description of M2, image data block 102 is partitioned into sub-blocks 610. Here, where an 8 x 8 image data block 102 has been provided, the preferred embodiment of the invention includes partitioning image data block 102 into 4 x 4 sub-blocks 610 each having 4 pixels 120 arranged in a 2 x 2 pattern. Approximate values for each sub-block are then generated by representing each sub-block 610 with a single value in an approximation data block 602. Those skilled in the art will recognize that these single value approximations can be obtained in many ways, such as averaging or adding the four pixels 120 in the sub-block, or by using the minimum, maximum median or some other designated value. The remainder of the image processing by M2 is performed using ordinary JPEG compression. That is, approximation data block 602 is transformed at 104 into a block of coefficients 606 using the DCT. Coefficient block 606 is then quantized at 108, and quantized coefficient block 610 is arranged into a one dimensional vector 514 which is encoded into a bit stream and stored in buffer 114.

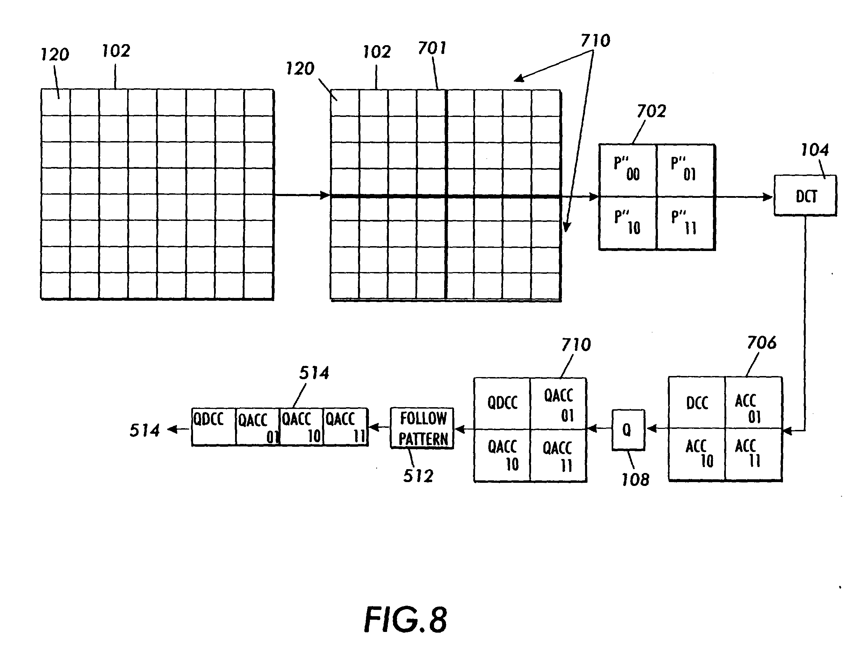

Referring now to FIG. 8, M3 operates very similarly to M2 with the difference being the magnitude of the approximation that takes place. As shown, image data block 102 is again partitioned into sub-blocks 710, but here the 8 x 8 image data block 102 is partitioned into 2 x 2 sub-blocks 710 each having 16 pixels 120 arranged in a 4 x 4 pattern. This approximation provides for less accurate image reproduction than the embodiment described above with reference to FIG. 7, since more data loss can take place but does so at an increased processing rate. As indicated earlier, image processing by module M3 will be slower than M4, but its reproduction accuracy will be higher. Approximate values for each sub-block are generated by representing each sub-block 710 with a single value in an approximation data block 602. Approximation data block 702 is transformed at 104 into a block of coefficients 706 using the DCT. Coefficient block 706 is then quantized at 108, and quantized coefficient block 710 is arranged into a one dimensional vector 514 which is encoded into a bit stream and stored in buffer 114.

As explained earlier, one advantage of the present invention is the ability to tailor the size and shape of the blocks and sub-blocks to the needs of the user. Thus, decision logic device 104 can be locked into module M1 or possibly module M2 when it is known that the image being transmitted has a lot of fine detail and too much data would be lost with approximation. On the other hand, decision logic device 104 could be locked to module M3 or M4 when the original image includes only text on a plain paper background. It should be noted here that processing by module M4, which produces the lowest image quality output, is not necessarily undesirable. In fact, this module should be used heavily when the original image contains smooth image data or blank constant areas, because fewer bits will be sent to the buffer when the image has been processed. In other words, image quality will not be lost since there is less image data to process, and the approximations that occur in module M4 will produce fairly accurate results.

It is, therefore, apparent that there has been provided in accordance with the present invention, an apparatus for using multiple compressors to fill a buffer and accomplish enhanced image data compression that fully satisfies the aims and advantages hereinbefore set forth. In the preferred embodiment of the invention a program storage device readable by a machine (such as a digital computer) will tangibly embody a program of instructions executable by the machine to perform method steps as described herein to compress a document image.

According to a preferred embodiment of an apparatus for improving the speed and efficiency of electronic data transmission, the module selecting means comprises means for checking said buffer status, wherein said buffer status indicates a volume of said input image data residing in said buffer, and is a function of said buffer fill rate and said buffer emptying rate, means for comparing said input image data volume residing in said buffer with a plurality of module threshold ranges to choose a module associated with one of said module threshold ranges to receive said input image data and means for sending said input image data block to said chosen module.

Said module selecting means of an apparatus for improving the speed and efficiency of electronic data transmission further advantageously comprises means for checking said buffer status, wherein said buffer status indicates a volume of said input image data residing in said buffer, and is a function of said buffer fill rate and said buffer emptying rate, means for comparing said input image data volume residing in said buffer with a module threshold range to determine whether a module associated with said module threshold range should receive said input image data and means for either sending said input image data block to said associated module or comparing said input image data volume residing in said buffer with a next module threshold range associated with a next module, based on said comparing step.

Preferably, at least one of said modules of an apparatus for improving the speed and efficiency of electronic data transmission further comprises means for transforming said image data block into a block of coefficients, means for quantizing said coefficient block, means for arranging said quantized coefficient block into a one dimensional vector and means for encoding said one dimensional vector into a bit stream, thereby producing a processed image data block. At least one of said modules further advantageously comprises means for generating approximation data which provides an estimated value of said light intensity in said image data block; means for deriving output image data from said approximation data; and means for transmitting said output image data over telephone lines to a receiving device.

According to a preferred embodiment of an apparatus for improving the speed and efficiency of electronic data transmission, said approximation data generation means further comprises means for partitioning said image data block into a plurality of image data sub-blocks and means for representing each image data sub-block as a single value in an approximation data block.

The output image data derivation means of an apparatus for improving the speed and efficiency of electronic data transmission further advantageously comprises means for transforming said approximation data into a block of coefficients, means for quantizing said coefficient block, means for arranging said quantized coefficient block into a one dimensional vector and means for encoding said one dimensional vector into a bit stream, thereby producing said output image data.

According to a preferred embodiment of an apparatus for improving the speed and efficiency of electronic data transmission, the decision logic device comprises a buffer status input communicating with said buffer to indicate a volume of data residing in said buffer, a plurality of module threshold inputs each indicating a threshold of image data that may be most efficiently processed by an associated module and a selector which compares said buffer volume indication with said module threshold indication to choose a module for receipt of said input image data. Said decision logic device further preferably comprises a buffer status input communicating with said buffer to indicate a volume of data residing in said buffer, a module threshold input which indicates a threshold of image data that may be most efficiently processed by an associated module and a selector which compares said buffer volume indication with said module threshold indication and causes, based upon said comparison, either sending of said segmented image data block to said associated module or connecting of said module threshold input with a next module associated with a next module.

At least one of said modules of an apparatus for improving the speed and efficiency of electronic data transmission further advantageously comprises a converter which transforms said image data block into a block of coefficients, a quantizer which divides each coefficient in said coefficient block by a predetermined value and rounds a resulting value to a whole number, a sequencer which places said coefficients in said quantized coefficient block into a one dimensional vector and an encoder which converts said one dimensional vector into a bit stream. At least one of said modules further preferably comprises an approximation data generator which provides an estimated value of said light intensity in said image data block and output image data generator which derives output image data from said approximation data.

According to an advantageous embodiment of an apparatus for improving the speed and efficiency of electronic data transmission, the approximation data generator further comprises a partitioner which divides said image data block into a plurality of image data sub-blocks and a simplifier which represents each image data sub-block as an approximate value in an approximation data block.

The output image data generator of an apparatus for improving the speed and efficiency of electronic data transmission further advantageously comprises a converter which transforms said approximation data block into a block of coefficients, a quantizer which divides each coefficient in said coefficient block by a predetermined value and rounds a resulting value to a whole number, a sequencer which places said coefficients in said quantized coefficient block into a one dimensional vector and an encoder which converts said one dimensional vector into a bit stream.

## Claims

1. An apparatus for improving the speed and efficiency of electronic data transmission, comprising:

   a) means for acquiring input image data which represents the light intensity of an image;
   b) means for segmenting said input image data to form a plurality of image data blocks;
   c) means for selecting, based on a buffer status, a module for receipt of an input image data block;
   d) means for processing said received image data block in said module; and
   e) means for depositing said processed image data block to a buffer at a buffer fill rate.

2. A an apparatus as claimed in claim 1 wherein said module selecting means further comprises means for choosing one among a plurality of image processing modules, wherein each image processing module processes image data at a different rate and has a different module threshold range, wherein each module threshold range is a range of buffer data volume that may be most efficiently processed by said image processing module.

3. An apparatus for improving the speed and efficiency of electronic data transmission as claimed in claim 2 wherein said threshold range sizes are based upon a CPU speed, an image content, a compression setting, a buffer size a modem speed and a user interface.

4. An apparatus as claimed in claim 3 wherein said threshold ranges are equal in size.

5. An apparatus as claimed in claim 3 wherein a having a lowest threshold range processes said data at a rate that is faster than a processing rate of said modem.

6. An apparatus for improving the speed and efficiency of electronic data transmission, comprising:

   a) a segmenter which divides image data into a plurality of input image data blocks, wherein said image data corresponds to the light intensity of an original image;

b) a plurality of image processing modules communicating with said segmenter, wherein any of said modules may process said segmented image data blocks;

c) a buffer communicating with said image processing modules to store said segmented image data after it is processed by one of said modules; and

d) a decision logic device communicating with said buffer and with said modules to designate one of said modules for processing of a segmented image data block, based upon a status of said buffer.

7. A an apparatus as claimed in claim 6 wherein each of said image processing modules processes said segmented image data at a different rate and has a different module threshold range, wherein each module threshold range is a range of buffer data volume that may be most efficiently processed by said image processing module.

8. An apparatus for improving the speed and efficiency of electronic data transmission as claimed in claim 2 wherein said threshold range sizes are based upon a CPU speed, an image content, a compression setting, a buffer size a modem speed and a user interface.

9. An apparatus as claimed in claim 7 wherein said threshold ranges are equal in size.

10. An apparatus as claimed in claim 7 wherein a having a lowest threshold range processes said data at a rate that is faster than a processing rate of said modem.

FIG. 1

FIG. 2

EP 0 997 848 A2

$T_4 < T_4 < T_3 < T_2 < T_1 < T_0$

FIG. 3

FIG. 4

FIG.5

FIG.6

EP 0 997 848 A2

EP 0 997 848 A2

120   102   610   120   601   610   602

| $P'_{00}$ | $P'_{01}$ | $P'_{02}$ | $P'_{03}$ |
| $P'_{10}$ | $P'_{11}$ | $P'_{12}$ | $P'_{13}$ |
| $P'_{20}$ | $P'_{21}$ | $P'_{22}$ | $P'_{23}$ |
| $P'_{40}$ | $P'_{41}$ | $P'_{42}$ | $P'_{43}$ |

104

DCT

606

| DCC | ACC 01 | ACC 02 | ACC 03 |
| ACC 10 | ACC 11 | ACC 12 | ACC 13 |
| ACC 20 | ACC 21 | ACC 22 | ACC 23 |
| ACC 30 | ACC 31 | ACC 32 | ACC 33 |

108   Q

610

| QDCC | QACC 01 | QACC 02 | QACC 03 |
| QACC 10 | QACC 11 | QACC 12 | QACC 13 |
| QACC 20 | QACC 21 | QACC 22 | QACC 23 |
| QACC 30 | QACC 31 | QACC 32 | QACC 33 |

FOLLOW PATTERN
512

514

| QDCC | QACC 01 | QACC 10 | . . . . . . . . . . | QACC 33 |

24

FIG.7

FIG.8